# EUROPÄISCHE PATENTSCHRIFT

(11) **EP 3 590 346 B1**
(45) Veröffentlichungstag und Bekanntmachung des Hinweises auf die Patenterteilung: **22.03.2023**
(21) Anmeldenummer: 18197975.8
(22) Anmeldetag: 01.10.2018
(51) Int. Cl.: A23C 9/142, A23C 1/00, A23C 9/156, A23C 9/123, A23C 9/127, A23C 19/076, A23C 9/12

(54) **VERFAHREN ZUR HERSTELLUNG VON LACTOSEFREIEN MILCHPRODUKTEN MIT VERSTÄRKTEM SÜSSEINDRUCK**
PROCESS FOR PRODUCING LACTOSE-FREE DAIRY PRODUCTS WITH INCREASED SWEETNESS
PROCÉDÉ DE PRODUCTION DES PRODUITS LAITIERS SANS LACTOSE AVEC DOUCEUR ELEVÉE

(30) Priorität: 03.07.2018 EP 18181410
(43) Veröffentlichungstag der Anmeldung: 08.01.2020
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 3 123 870
- WO-A1-2011/077739
- Germano Mucchetti ET AL: "The pre-concentration of milk by nanofiltration in the production of Quarg-type fresh cheeses", Lait, 1. Januar 2000 (2000-01-01), Seiten 43-50, XP055087166, DOI: 10.1051/lait:2000106 Gefunden im Internet: URL:http://lait.dairy-journal.org/articles /lait/pdf/2000/01/L0107.pdf [gefunden am 2013-11-07]
- Hiroaki Matsui ET AL: "Sensory Characteristics of Membrane Treated-Milk (Studies on the Sensory Characteristics and Physicochemical Properties of UHT Processed Milk Part VI)", Nippon Shokuhin 644 Kagaku Kogaku Kaishi, 1. Januar 2006 (2006-01-01), Seiten 1-7, XP055568114, Gefunden im Internet: URL:https://www.jstage.jst.go.jp/article/n skkk/53/12/53_12_644/_pdf/-char/en [gefunden am 2019-03-12]

## Beschreibung

### PRIORITÄTSANSPRUCH

Die vorliegende Patentanmeldung beansprucht die Priorität der jüngeren Europäischen Patentanmeldung

EP18 181 410.4 vom 3. Juli 2018.

### GEBIET DER ERFINDUNG

Die Erfindung befindet sich auf dem Gebiet der Molkereiprodukte und betrifft ein Verfahren zur Herstellung von lactosefreien Milchprodukten mit verstärktem Süßeindruck.

### TECHNOLOGISCHER HINTERGRUND

Neugeborene Säugetiere bilden während ihrer Stillzeit das Enzym Laktase, welches das Disaccharid Milchzucker in die vom Stoffwechsel verwertbaren Zuckerarten D-Galaktose und D-Glukose spaltet. Im Laufe der natürlichen Entwöhnung von der Muttermilch sinkt die Aktivität der Laktase auf etwa 5-10% der Aktivität bei der Geburt. Das gilt für den Menschen und alle anderen Säugetiere. Nur bei Populationen, die seit langer Zeit Milchwirtschaft betreiben, hat sich eine Mutation durchgesetzt, die dazu führt, dass auch noch im Erwachsenenalter genügend Lactase produziert wird (Laktasepersistenz). Vermutlich liegt das daran, dass die höhere Lactaseaktivität einen Selektionsvorteil (Mineralstoffe, Nährwert) für diese Gruppen bot.

Bei mangelhafter Lactaseaktivität gelangt ungespaltener Milchzucker beim Menschen bis in den Dickdarm, wo er von Darmbakterien aufgenommen und vergoren wird. Als Gärungsprodukte entstehen Milchsäure sowie Methan und Wasserstoff. Die Gase führen unter anderem zu Blähungen, die osmotisch aktive Milchsäure zu einem Wassereinstrom in den Darm (osmotischer Diarrhoe).

In Asien und Afrika betrifft die fehlende Lactasepersistenz bzw. Lactoseintoleranz den größten Teil der erwachsenen Bevölkerung (90 % oder mehr), in Westeuropa, Australien und Nordamerika sind es 5-15 % (bei hellhäutigen Menschen).In Deutschland leiden nach Schätzungen 15-25 % der Gesamtbevölkerung an einer Milchzuckerunverträglichkeit. Der Grund für eine Lactoseintoleranz ist ein angeborener Enzymmangel, bei dem die entsprechenden Enzyme fehlen, die den Milchzucker in seine Einzelteile aufspalten und abbauen. In den letzten Jahren ist zumindest das Bewusstsein für einen Zusammenhang der genannten Symptome mit der Anwesenheit von Lactose insbesondere in Milchprodukten stark gewachsen. Dies hat dazu geführt, dass es ein großes Bedürfnis nach lactosearmen oder besser noch lactosefreien Produkten gibt.

Es ist damit klar, dass es gerade in den Industrienationen ein wachsendes Bedürfnis an lactosefreien Produkten gibt. Nachteilig ist jedoch, dass solche Produkte in der Regel einen bitteren bis mineralischen Beigeschmack haben, der überdeckt werden muss, beispielsweise indem man die Menge an Zucker in den Produkten erhöht.

Dies ist jedoch ebenfalls unerwünscht, da der Markttrend in die entgegengesetzte Richtung führt und Produkte wünscht, die nur geringe Mengen an Süßstoffen - seien diese natürlich oder synthetisch enthält. Will man also übliche lactosefreie Milch einsetzen, so kann man den Weg der Zugabe weiteren Zuckers zur Maskierung des Bittergeschmackes also gerade nicht gehen.

### RELEVANTER STAND DER TECHNIK

Gegenstand der EP 1503630 B1 (VALID) ist beispielsweise ein Verfahren zur Herstellung von lactosefreien Produkten, bei dem die Ausgangsmilch zunächst einer Ultrafiltration unterworfen wird. Das dabei anfallende erste Permeat wird nanofiltriert, wobei die Lactose über das zweite Retentat ausgeschleust wird und die einwertigen Salze (Natrium, Kalium) in das zweite Permeat gelangen. Dieses wird mit Hilfe einer Umkehrosmose aufkonzentriert und das so erhaltene dritte Retentat dem ersten Retentat wieder beigemischt, bevor dieses dann einer Hydrolyse unterworfen wird, um die Lactose enzymatisch abzubauen. Das Verfahren hat indes zwei erhebliche Nachteile: der Lactosegehalt des Retentats, welches hydrolysiert wird, lässt sich nicht steuern, sondern stellt sich aufgrund der Bedingungen in der Ultrafiltration automatisch auf einen sehr niedrigen Wert ein. In der Hydrolyse stehen dann auch nur geringe Mengen an Zucker für die Spaltung zur Verfügung, so dass eine zwar lactosefreie Milch erhalten wird, die jedoch weit weniger süß und geschmacklich ansprechend ist, wie die Ausgangsmilch. Des Weiteren gelangen über den Prozess nur Alkalisalze in die Milch zurück. Um das Geschmacksprofil der Ursprungsmilch wieder einigermaßen zu erreichen, müssen einwertige Salze aus anderen Quellen wieder zugesetzt werden. In Summe wird jedenfalls ein Produkt erhalten, welches dem gewünschten Geschmacksprofil der Ausgangsmilch nur angenähert entspricht.

Ein ähnlicher Weg wird in der EP 2207428 B1 (ARLA) vorgeschlagen: hier wird die Milch ebenfalls zunächst einer Ultrafiltration unterworfen, wobei das Permeat dann nanofiltriert wird. Das Permeat aus der Nanofiltration wird mit dem Retentat aus der Ultrafiltration vermischt und anschließend hydrolysiert. Dieses Verfahren weist jedoch bezüglich des Geschmacksprofils der resultierenden Produkte die gleichen Nachteile wie das Valio-Verfahren auf.

Das Dokument WO 2011/077739 A1 offenbart ein Verfahren zur Herstellung von Eiscreme, die eine hohe Lagerstabilität aufweisen und leicht mit einem Löffel geschöpft werden können. Das offenbarte Verfahren umfasst einen Entsalzungsschritt, die Hydrolyse von Lactose mit Lactase und einen Abkühlungsschritt. In der Entsalzungsstufe kann als Ausgangsmaterial Rohmilch eingesetzt werden. Im abschließenden Kühlschritt wird das im Lactose-Abbau-Schritt behandelte Material abgekühlt.

Das Dokument EP 3 123 870 A1 offenbart offenbart ein Verfahren zur Herstellung von Milchprodukten mit definiertem Lactosegehalt, beispielsweise etwa 0,5 bis etwa 2,5 Gew.-%, umfassend die folgenden Schritte:
(1) Ultrafiltration einer Ausgangsmilch zur Erzeugung eines ersten Permeats P1 und eines ersten Retentats R1;
(2) Nanofiltration des ersten Permeats P1 zur Erzeugung eines zweite Permeats P2 und eines zweiten Retentats R2;
(3) Hydrolyse des zweiten Retentats R2 unter Zugabe von Lactase;
(4) Vermischen des ersten Retentats R1 mit jeweils einer solchen Menge des zweiten Permeats P2 sowie des Hydrolyseproduktes aus Schritt (c), so dass ein standardisiertes Milchprodukt erhalten wird, dessen Gehalt an Proteinen und Mineralien dem der Ausgangsmilch entspricht.

Gegenstand des Dokumentes Lait, 2000, 80 (1), Seiten 43-50 ist eine Untersuchung über den Einfluss der Anwendung einer zuvor nanofiltrierten Milch auf die Eigenschaften eines Quarks, welcher aus dieser nanofiltrierten Milch hergestellt wird. Vorversuche des Nanofiltrationsverfahrens sind mit wässrigen Lösungen von NaCl, CaCl₂, MgSO₄, Na₂SO₄, Laktose und Vollmilch durchgeführt worden. Das Dokument beschreibt ein Verfahren zur Herstellung von Quark, wobei eines aus der Nanofiltration von Vollmilch resultierenden Retentates verwendet wird.

### AUFGABE DER ERFINDUNG

Die Aufgabe der vorliegenden Erfindung hat daher darin bestanden, zum einen lactosefreie Milchprodukte und diese enthaltende konfektionierte Endprodukte zur Verfügung zu stellen, die zum anderen gegenüber konventionellen Vergleichsprodukten des Marktes über einen verstärkten Süßeindruck ohne bitteren Beigeschmack verfügen und so geeignet sind, als Bestandteil von Nahrungsmitteln zu fungieren, denen man keine oder nur noch geringe Mengen an zusätzlichen natürlichen oder synthetischen Süßstoffen beifügen muss, um die vom Verbraucher gewünschte und erwarteten Süße zu erreichen.

### BESCHREIBUNG DER ERFINDUNG

Gegenstand der Erfindung ist ein Verfahren zur Herstellung von Milchprodukten mit verstärktem Süßeindruck umfassend die folgenden Schritte:
(a) Bereitstellen einer Milch;
(b) Unterwerfen der Rohmilch einer Nanofiltration unter Erhalt eines Permeats P1 bzw. Diluats D1 und eines Retentats R1, wobei die Nanofiltration mit einer Membran, die einen mittleren Porendurchmesser von etwa 500 bis etwa 2.000 Dalton aufweist, und bei einer Temperatur im Bereich von etwa 10 bis etwa 50 °C durchgeführt wird;
(c) Einstellen der Trockenmasse des im Schritt (b) erhaltenen Retentats R1; und
(d) Hydrolyse des im Schritt (c) erhaltenen Konzentrats unter Zusatz von Lactase, wobei Lactase in einer Menge von 180.000 bis 250.000 FCC-Einheiten pro kg zu hydrolysierender Lactose zusetzt wird und die Hydrolyse batchweise oder kontinuierlich über einen Zeitraum von etwa 30 bis etwa 720 Minuten bei einer Temperatur im Bereich von etwa 23 bis etwa 27 °C durchführt wird.

Überraschenderweise wurde gefunden, dass durch einen vorgeschalteten Filtrationsschritt die in Rohmilch bzw. Magermilch enthaltenen Bitterstoffe so weit abgetrennt werden können, dass sie den Geschmackeindruck der Milch nicht mehr beeinträchtigen können. Durch Hydrolyse werden pro Mol in der Rohmilch enthaltenen Lactose zwei Moleküle Monosaccharid, nämlich Glucose und Galaktose gewonnen, was zu einer Verdoppelung des Süßeindrucks führt. Die so erhaltenen Milchprodukte lassen sich in vielfältiger Weise weiter konfektionieren, sei es in direkter Weise zu Trinkmilch, Joghurt, Pudding und dergleichen oder indirekt als Zutat beispielsweise zur Herstellung von Backwaren.

### SEPARATION

Das erfindungsgemäße Verfahren geht grundsätzlich von Milch, speziell Rohmilch bzw. Vollmilch aus. Vor dem Filtrationsschritt kann jedoch die Einstellung des Fettgehaltes durch Separation oder Rahmzusatz erfolgen.

Unter Separation wird die Abtrennung des Rahms bis auf einen Fettanteil von etwa 4 Gew.-% sowie die Entfernung von Feststoffen verstanden. Das Verfahren kann sowohl in der Wärme bei einer Temperatur im Bereich von etwa 20 bis etwa 60 °C oder in der Kälte bei einer Temperatur von etwa 8 bis etwa 18 °C durchgeführt werden.

### NANOFILTRATION

Die Milch, vorzugsweise Vollmilch bzw. die nach der Separation erhaltene Magermilch werden einer Nanofiltration unterworfen, wodurch über das Permeat bzw. Diluat den Mineralanteil, der für den Bittergeschmack verantwortlich ist, weitgehend oder sogar vollständig abzutrennen.

Die Nanofiltration stellt ein Filtrationsverfahren aus dem Bereich der Membrantechnik dar, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch *"Cut-off"*) bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 70 bar liegt.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Nanofiltration wird im Sinne der vorliegenden Erfindung "heiß" oder "kalt", d.h. im Temperaturbereich von etwa 10 bis etwa 50 °C durchgeführt. Bevorzugt ist es jedoch, bei Temperaturen im niedrigen Bereich von etwa 10 bis etwa 20 °C zu arbeiten.

### KONZENTRIERUNG ZUR EINSTELLUNG DER TROCKENMASSE

Die Konzentrierung des Retentats erfolgt typisch in so genannten Eindampfern, beispielsweise Rührkesseln mit Destillationsaufsatz. Dabei wird das Permeat üblicherweise bis auf eine Trockenmasse von etwa 10 bis etwa 25 Gew.-% und insbesondere etwa 15 bis 20 Gew.-% entwässert.

### HYDROLYSE

Das noch Lactose enthaltende Konzentrat wird nachfolgend einer Hydrolyse zugeführt. Lactose gehört zur Gruppe der Disaccharide und besteht aus den beiden Molekülen D-Galaktose und D-Glucose, die über eine β-1,4-glycosidische Bindung verbunden sind.

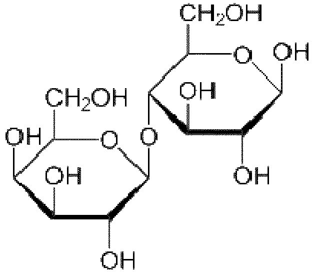

Zum Abbau in die beiden Zuckerkomponenten wird Lactose mit dem Enzym Lactase (auch als LPH oder *LCT* bezeichnet) versetzt. Die Hydrolyse kann batchweise oder kontinuierlich über einen Zeitraum von etwa 5 bis etwa 60 Minuten durchgeführt werden und erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 23 bis etwa 27 °C sowie einem leicht sauren pH-Wert von etwa 5 bis 6 durchzuführen.

### KONFEKTIONIERUNG

Im Anschluss an die Hydrolyse können die resultierenden Produkte zu den gewünschten End- oder Zwischenprodukten konfektioniert werden. Die Art der Konfektionierung ist dabei unkritisch, da diese sich allein daran orientiert, welches Produkt gewünscht wird. Eine Möglichkeit stellt etwa die Herstellung von Milchpulvern dar; in diesem Fall werden die Hydrolysate gegebenenfalls nach vorheriger Pasteurisierung über einen Sprühturm gegeben und zu trockenen Pulvern verarbeitet.

Es ist aber möglich, die Hydrolyseprodukte direkt in flüssige Endprodukte zu konfektionieren: durch Zugabe von Kakaopulver entsteht beispielsweise eine Schokotrinkmilch, durch Zugabe von Joghurtkulturen Joghurt, Kefir oder Skyr, die alle ohne weiteren Zusatz von Süßstoffen auskommen. Das Hydrolyseprodukt kann aber auch als reine lactosefreie Milch in den Handel gebracht werden und dann etwa dazu dienen, Puddingspeisen oder Backwaren herzustellen.

### BEISPIELE

### BEISPIEL 1

### Herstellung von lactosefreier Milch (erfindungsgemäß)

1.000 L Rohmilch wurden auf eine Nanofiltrationsanlage mit einer Keramikmembran (Porendurchmesser 1.000 Dalton) gegeben und bei 15 °C filtriert. Das mineralstoffreiche Permeat wurde abgetrennt und separat weiterverarbeitet, das Retentat in einen Eindampfer überführt und dort auf einen Feststoffgehalt von 50 Gew.-% eingestellt. Anschließend wurde dem Konzentrat in einen Hydrolysereaktor gemäß EP 2907393 A1 geleitet und dort in Gegenwart von Lactase bei 25 °C kontinuierlich hydrolysiert, wobei die mittlere Verweilzeit etwa 30 Minuten betrug. Das resultierende Hydrolyseprodukt wies einen Mineralgehalt von 2,7 Gew.-% und einen Rest-Lactosegehalt von 0,05 Gew.-% auf.

### VERGLEICHSBEISPIEL V1

### Herstellung lactosefreier Milch (nach dem Stand der Technik)

1.000 L Rohmilch wurden in einen Eindampfer überführt und dort auf einen Feststoffgehalt von 50 Gew.-% eingestellt. Anschließend wurde das Konzentrat in einen diskontinuierlichen Rührkessel überführt, mit Lactase in einer Menge von 200.000 FCC-Einheiten pro kg zu hydrolysierender Lactose versetzt und bei 25 °C über einen Zeitraum von 30 Minuten hydrolysiert. Das resultierende Hydrolyseprodukt wies einen Mineralgehalt von 4,1 Gew.-% und einen rest-Lactosegehalt von 0,6 Gew.-% auf.

### GESCHMACKLICHE BEURTEILUNG

### Verkostung der Hydrolyseprodukte

Die beiden Hydrolyseprodukte nach Beispiel 1 und Vergleichsbeispiel V1 wurden von einem Panel bestehend aus 5 erfahrenen Testern hinsichtlich Süße und mineralischem sowie metallischem Beigeschmack auf einer Skala von (1) = kaum wahrnehmbar bis (5) = dominant bewertet. Die Ergebnisse sind in **Tabelle 1** wiedergegeben:

**Tabelle 1**

| Ergebnisse der Verkostung | | |
|---|---|---|
| | **Beispiel 1** | **Vergleichsbeispiel V1** |
| Süßeindruck | 4,5 | 2,0 |
| Bittergeschmack | 1,0 | 3,5 |
| Metallischer Geschmack | 1,0 | 2,5 |

Die Verkostungsergebnisse zeigen eine deutliche geschmackliche Präferenz für das erfindungsgemäße Produkt.

## Patentansprüche

1. Verfahren zur Herstellung von lactosefreien Milchprodukten mit verstärktem Süßeindruck umfassend die folgenden Schritte:
(a) Bereitstellen einer Milch;
(b) Unterwerfen der Milch einer Nanofiltration unter Erhalt eines Permeats P1 bzw. Diluats D1 und eines Retentats R1, wobei die Nanofiltration mit einer Membran, die einen mittleren Porendurchmesser von etwa 500 bis etwa 2.000 Dalton aufweist, und bei einer Temperatur im Bereich von etwa 10 bis etwa 50 °C durchgeführt wird;
(c) Einstellen der Trockenmasse des im Schritt (b) erhaltenen Retentats R1; und
(d) Hydrolyse des im Schritt (c) erhaltenen Konzentrats unter Zusatz von Lactase, wobei Lactase in einer Menge von 180.000 bis 250.000 FCC-Einheiten pro kg zu hydrolysierender Lactose zusetzt wird und die Hydrolyse batchweise oder kontinuierlich über einen Zeitraum von etwa 30 bis etwa 720 Minuten bei einer Temperatur im Bereich von etwa 23 bis etwa 27 °C durchführt wird.

2. Verfahren nach Anspruch 1, **dadurch gekennzeichnet, dass** man das Permeat bis auf eine Trockenmasse von etwa 10 bis etwa 25 Gew.-% einstellt.

3. Verfahren nach mindestens einem der Ansprüche 1 bis 2, **dadurch gekennzeichnet, dass** man die Hydrolyseprodukte anschließend zu einem Endprodukt konfektioniert.

## Claims

1. A process for the preparation of lactose-free dairy products with enhanced sweetness impression comprising the following steps:
(a) providing a milk;
(b) subjecting the milk to nanofiltration to obtain a permeate P1 or diluate D1 and a retentate R1, the nanofiltration being carried out with a membrane having an average pore diameter of about 500 to about 2,000 Daltons and at a temperature in the range from about 10 to about 50°C;
(c) adjusting the dry matter of the retentate R1 obtained in step (b); and
(d) hydrolysis of the concentrate obtained in step (c) with the addition of lactase, wherein lactase is added in an amount of from 180,000 to 250,000 FCC units per kg of lactose to be hydrolysed and the hydrolysis is carried out batchwise or continuously over a period of from about 30 to about 720 minutes at a temperature in the range of from about 23 to about 27 °C.

2. The process according to claim 1, **characterised in that** the permeate is adjusted to a dry mass of about 10 to about 25 wt.%.

3. Process according to at least one of claims 1 to 2, **characterized in that** the hydrolysis products are subsequently made up into a final product.

## Revendications

1. Procédé pour la fabrication de produits laitiers sans lactose à sucrosité accentuée, comprenant les étapes suivantes consistant à :
(a) fournir un lait ;
(b) soumettre le lait à une nanofiltration pour obtenir un perméat P1 ou diluat D1 et un rétentat R1, la nanofiltration étant effectuée à l'aide d'une membrane qui présente un diamètre moyen de pore d'environ 500 à environ 2 000 daltons, et à une température dans la plage d'environ 10 à environ 50 °C ;
(c) ajuster la matière sèche du rétentat R1 obtenu dans l'étape (b) ; et
(d) hydrolyser le concentré obtenu dans l'étape (c) avec addition de lactase, la lactase étant ajoutée en une quantité de 180 000 à 250 000 unités FCC par kg au lactose à hydrolyser et l'hydrolyse étant effectuée en mode discontinu ou continu pendant une durée d'environ 30 à environ 720 minutes à une température dans la plage d'environ 23 à environ 27 °C.

2. Procédé selon la revendication 1, **caractérisé en ce qu'**on ajuste le perméat à un pourcentage de matière sèche d'environ 10 à environ 25 % en poids.

3. Procédé selon au moins l'une des revendications 1 et 2, **caractérisé en ce qu'**on met ensuite les produits d'hydrolyse sous forme d'un produit final.
